# EUROPEAN PATENT APPLICATION

(11) **EP 4 613 153 A1**
(43) Date of publication of application: **10.09.2025**
(21) Application number: 25151292.7
(22) Date of filing: 10.01.2025
(51) Int. Cl.: A47J 27/00, A47J 27/022, A47J 36/02

(54) **METHOD OF MANUFACTURING A PAN AND NON-STICK PAN**

(30) Priority: 07.03.2024 CN 202410261098
(71) Applicant: Jiangmen Bonanza Metalware Co., Ltd., Jiangmen, Guangdong 529100 (CN)
(72) Inventor: LIN, Yaohuan, Guangdong, 529100 (CN); LIN, Huabin, Guangdong, 529100 (CN)
(74) Representative: Purdylucey Intellectual Property

(57) **Abstract**

A method of manufacturing a pan is disclosed. The method includes: preparing a roll of stainless-steel; feeding the stainless-steel plate into a roller for rolling to form a pattern on the stainless-steel plate, where the stainless-steel plate enters into the roller in a entering direction with an angle formed between the entering direction and the horizontal line, and the stainless-steel plate exits from the roller in a exiting direction with an angle formed between the entering direction and the horizontal line; punching a rolled stainless-steel plate to form a pan body; compounding a uniform heating layer and a heating layer on a bottom of the pan body in sequence; sandblasting an inner surface of the pan; spraying the inner surface of the pan; and polishing the inner surface of the pan body to remove the coating on the top surface of each of the ribs.

## Description

### TECHNICAL FIELD

The present application relates to the field of kitchen utensils, and in particular to a method of manufacturing a pan, and non-stick pan manufactured by using the method of manufacturing a pan.

### BACKGROUND

Currently, non-stick pan on the market is generally equipped with an anti-stick coating on the pan body to prevent food from sticking to the pan body. However, the coating is prone to falling off due to heat and friction with a turner during use, which affects use of non-stick pan and even contaminates food.

In order to prevent the coating on the non-stick pan from falling off, a non-stick pan with a concave and convex pattern on the inner surface of the pan body has appeared on the market. The concave and convex pattern is mainly arranged on the bottom of the pan body, and inner walls of some pan are also provided with the pattern. The concave parts of the concave and convex pattern are provided with an anti-stick coating, while the top surface of the concave and convex pattern is not provided with a coating. This design reduces the contact area between food and the inner surface of the pan, effectively improves the anti-stick effect, prevents direct contact of the food and turner with the coating, improves the durability of the coating and prevents the coating from falling off. However, the concave and convex pattern on the exiting non-stick pan is mainly formed by stamping or chemical corrosion. In the case that the stamping process is used to process the concave and convex pattern on the pan body, due to the problem of demoulding, the size of the concave and convex pattern obtained by stamping is generally relatively large, and the anti-stick effect is reduced; besides, stamping needs to be done one by one, so the efficiency is relatively low. In the case that chemical etching is used to process the concave and convex pattern in the pan body, the process is complicated, the production cost is high, and the chemical materials used tend to pollute the environment.

Therefore, it is necessary to propose a new method of manufacturing a pan and a non-stick pan manufactured by using the method of manufacturing a pan.

### SUMMARY

In order to solve one of the technical problems existing in the existing technology, the present application provides a method of manufacturing a pan, in which a pattern in a pan body is formed by rolling, which achieves high production efficiency and good anti-stick effect.

In addition, the present application also provides a non-stick pan manufactured by using the above method of manufacturing a pan.

In a first aspect of the present application, an embodiment provides a method of manufacturing a pan, at least including the following steps:
S 1, preparing a roll of stainless-steel plate;
S2, feeding the stainless-steel plate to a roller with a convex grain for rolling to form a pattern with a concave and convex structure on a side of the stainless-steel plate, where the pattern includes ribs and grooves, and the stainless-steel plate enters into the roller in a entering direction with an angle formed between the entering direction and a horizontal line, and the stainless-steel plate exits from the roller in a exiting direction with an angle formed between the entering direction and the horizontal line;
S3, punching the rolled stainless-steel plate to form a shape of a pan body, where the pattern is located on an inner surface of the pan body after punching;
S4, compounding a bottom of the pan body obtained after punching with a uniform heating layer and a heating layer in sequence;
S5, sandblasting part or all of the inner surface of the pan body, so as to form a rough surface on the inner surface of the pan body;
S6, spraying the sandblasted surface in the pan body, so as to form an anti-stick coating on the inner surface of the pan body; and
S7, polishing the sandblasted or sprayed surface in the pan body to remove the coating on a top surface of each of the ribs, so as to expose the stainless-steel on the top surface of each of the ribs.

The method of manufacturing a pan according to embodiments in the first aspect of the present application at least has the following beneficial effects: the pattern with the concave and convex structure is firstly machined on the stainless-steel plate in a rolling manner, compared with the existing technology, machining the pattern by rolling can avoid the difficulty in demoulding, so that the pattern of smaller size can be made, the anti-stick effect of the pan body is improved, and the rolling manner will not pollute the environment. At the same time, the rolling manner can achieve continuous machining of the fine pattern, improve the production efficiency, save production materials, and improve the product competitiveness.

According to the method of manufacturing a pan in the first aspect of the present application, in the step S2, a width of a top surface of the rib in the pattern formed after the rolling is 0.15-0.6 mm. Due to the limitations of demoulding technology, the width of the top surface of each of the ribs in the pattern formed by stamping in the existing technology is greater than 0.5 mm, and when the width of the top surface of each of the ribs is less than 0.5 mm, it is difficult to demold after a flat surface is stamped as a whole, and thus it is difficult to implement production. However, the narrower the width of the top surface of each of the ribs is, the smaller the contact area with food is and the better the anti-stick effect is.

According to the method of manufacturing a pan in the first aspect of the present application, in the above step S2, a depth of each of the grooves in the pattern formed after the rolling is 0.02-0.15 mm.

According to the method of manufacturing a pan according to the first aspect of the present application, in the step S2, when the depth of each of the grooves to be machined is required to be greater than 0.08 mm, the stainless-steel plate is first fed to a preheating furnace for heating and softening before the stainless-steel plate entering into the roller, and then the softened stainless-steel plate is fed to the roller. The softened stainless-steel plate has higher plasticity and makes the pattern be formed easier by rolling when passing through the roller, thereby reducing the difficulty of machining and improving the product yield rate.

According to the method of manufacturing a pan in the first aspect of the present application, the temperature inside the preheating furnace is 200°C-600°C, which effectively softens the stainless-steel material.

According to the method of manufacturing a pan in the first aspect of the present application, the roller includes a driving roller and a driven roller, and the convex pattern is arranged on a surface of the driving roller.

According to the method of manufacturing a pan in the first aspect of the present application, a pressure-increasing roller is arranged in the outer side of the roller. Through arrangement of the pressure-increasing roller, the pressure of the roller on the stainless-steel plate is increased, making it easier to roll out the pattern. Further, the diameter of the pressure-increasing roller is greater than the diameter of the roller.

According to the method of manufacturing a pan in the first aspect of the present application, the angle α formed between the entering direction of the stainless-steel plate when entering into the roller and the horizontal line is 5°-20°. The stainless-steel plate enters into roller with slight inclination, which makes entry of the stainless-steel plate smooth.

According to the method of manufacturing a pan in the first aspect of the present application, the angle β formed between the exiting direction of the stainless-steel plate when leaving the roller and the horizontal line is 5°-20°. The stainless-steel plate leaves the roll with slight inclination, which results in a smooth separation of the stainless-steel plate from the roller after the rolling.

According to the method of manufacturing a pan in the first aspect of the present application, in the pattern formed after the rolling in the above step S2, the top surface and side walls of the rib are perpendicular to each other. Such design can further decrease the width of the top surface, and improve the non-stick effect.

According to the method of manufacturing a pan in the first aspect of the present application, in the step S2, a width of the groove in the pattern formed after the rolling is 0.1-10 mm.

According to the method of manufacturing a pan in the first aspect of the present application, in the step S2, the pattern formed after the rolling includes at least one of mesh, honeycomb or a multi-point pattern.

According to the method of manufacturing a pan in the first aspect of the present application, the heating layer is made of ferritic stainless-steel.

According to the method of manufacturing a pan in the first aspect of the present application, the uniform heating layer is made of aluminum alloy.

In a second aspect of the present application, an embodiment provides a non-stick pan, the non-stick pan is manufactured by using the method of manufacturing a pan described in the first aspect of the present application.

The non-stick pan according to the embodiments of the second aspect of the present application at least has the following beneficial effects: the non-stick pan of the present application is manufactured by using the above-mentioned method of manufacturing a pan, which has high production efficiency and has no problems of demoulding and environmental pollution. At the same time, the produced non-stick pan can have smaller-sized pattern to improve the anti-stick effect of the pan body and improve the competitiveness of the product.

Additional features and advantages of the present application will be elaborated in the description which follows, and will be partially apparent from the description, or understood by practice of the present application. The objectives and other advantages of the present application can be achieved and obtained by structures particularly pointed out in the description, claims and accompanying drawings.

### BRIEF DESCRIPTION OF DRAWINGS

The accompanying drawings are used to provide a further understanding of the technical solution of the present application and constitute a part of the description. They are used to explain the technical solution of the present application together with the embodiments of the present application and do not constitute a limitation of the technical solution of the present application.
FIG. 1 is a first embodiment of rolling a stainless-steel plate in a method of manufacturing a pan provided in the first aspect of the present application.
FIG. 2 is a second embodiment of rolling a stainless-steel plate in the method of manufacturing a pan provided in the first aspect of the present application.
FIG. 3 is a cross-sectional view of a stainless-steel plate with a pattern obtained after rolling.
FIG. 4 is a cross-sectional view of a pan body obtained after punching the stainless-steel plate in FIG. 3.
FIG. 5 is a cross-sectional view of the pan body in FIG. 4 compounded with a uniform heating layer and a heating layer.
FIG. 6 is a cross-sectional view of the pan body in FIG. 5 after being sandblasted, sprayed and polished.

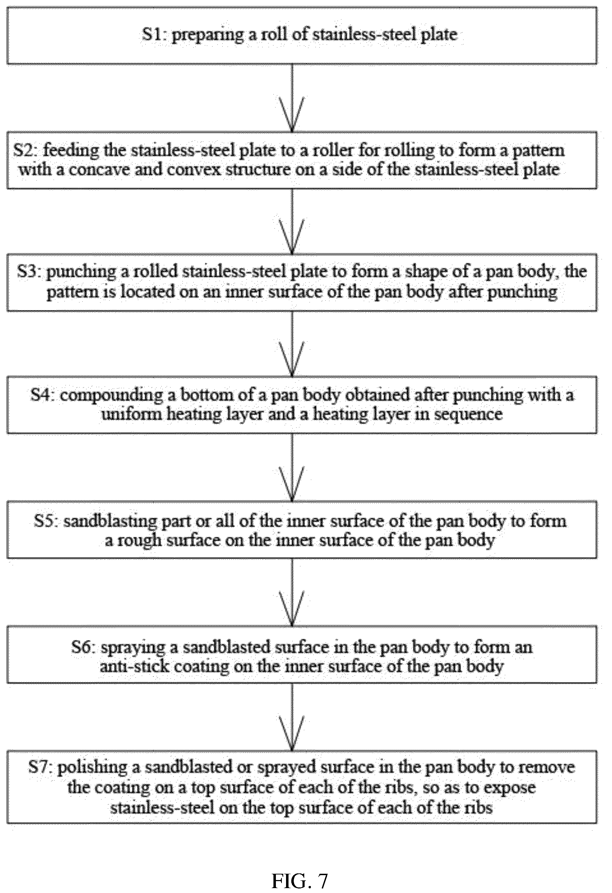

FIG. 7 is a step flow chart of the method of manufacturing a pan provided by the present application.

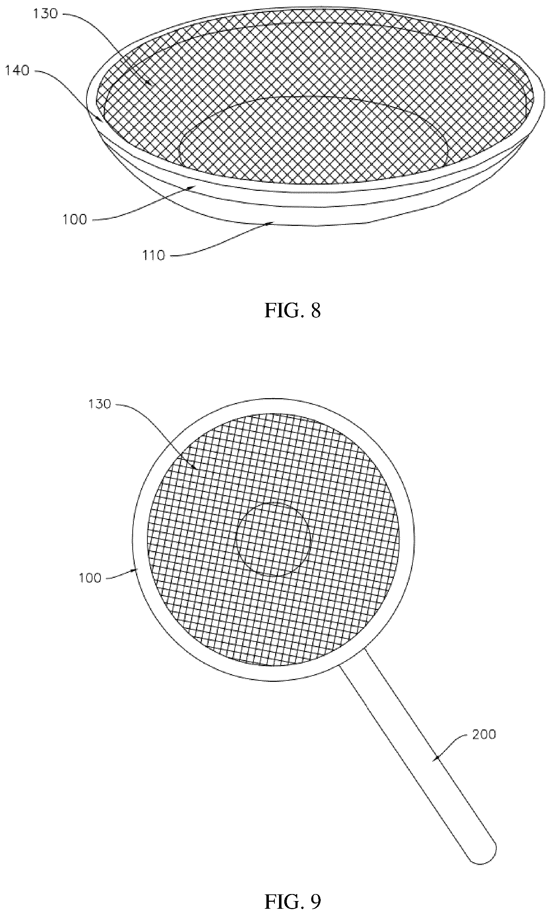

FIG. 8 is a schematic structural diagram of a non-stick pan provided in the second aspect of the present application.
FIG. 9 is a schematic diagram of the non-stick pan in FIG. 8 with a handle.

Reference numerals for the accompanying drawings:
stainless-steel plate roll 10, stainless-steel plate 11, roller 20, driving roller 21, driven roller 22, pressure-increasing roller 23, preheating furnace 30;
pan body 100, heating layer 110, uniform heating layer 120, pattern 130, rib 131, top surface 1311, side wall 1312, groove 132, coating 133, outer flange 140, handle 200.

### DETAILED DESCRIPTION

In order to make the purpose, technical solutions and advantages of the present application clear, the present application will be further described in detail below with reference to the accompanying drawings and embodiments. It should be understood that the specific embodiments described herein are only used to explain the present application and are not used to limit the present application.

In the description of the present application, it should be noted that, unless otherwise specified and limited, the term "connection" should be understood in a broad sense, for example, it can be a fixed connection or a movable connection, a detachable connection or a non-detachable connection, or an integrated connection; it can be a mechanical connection, an electrical connection, or communication with each other; it can be directly connection, or indirectly connection through an intermediate medium or structure; and it can be an internal connection, an indirect connection, or an interactive relationship between two elements.

In the description of the present application, it should be noted that "several" means one or more, "plural (or multiple)" means more than two; "greater than, less than, over, etc." are understood to exclude the original number; and "above, below, within, etc." are understood to include the original number. The description of "first", "second", etc. is only for the purpose of distinguishing technical features, and cannot be understood as indicating or implying relative importance or implying the quantity or order of the indicated technical features.

The embodiments of the present application will be further described below with reference to FIG.s 1 to 9.

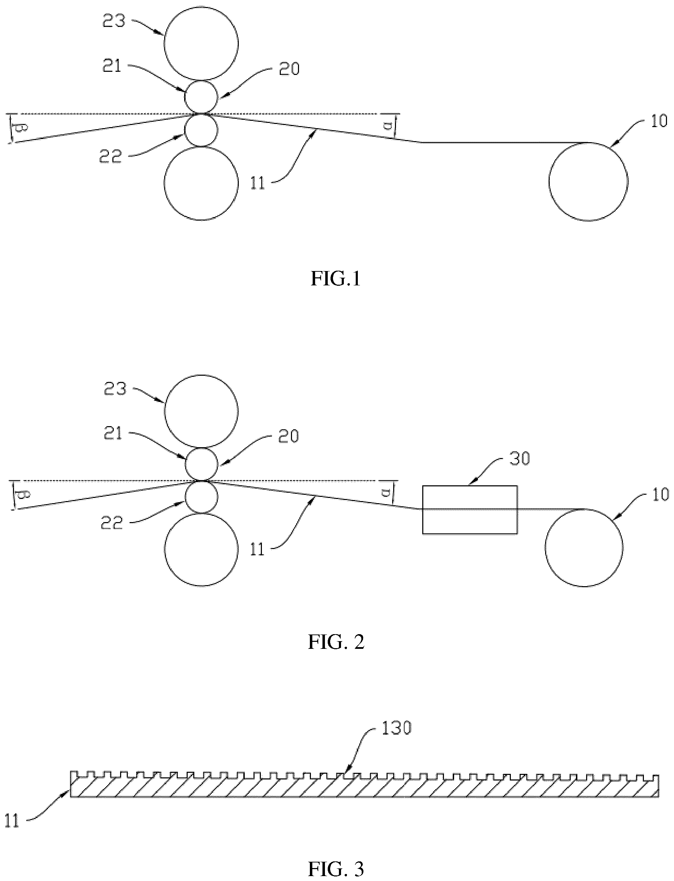

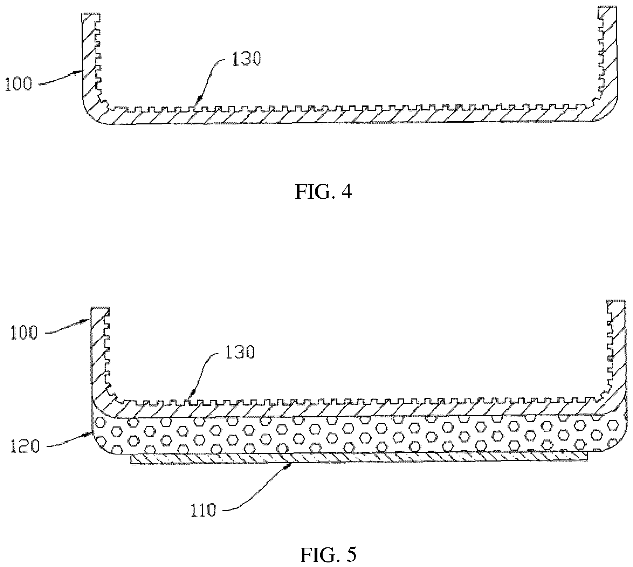

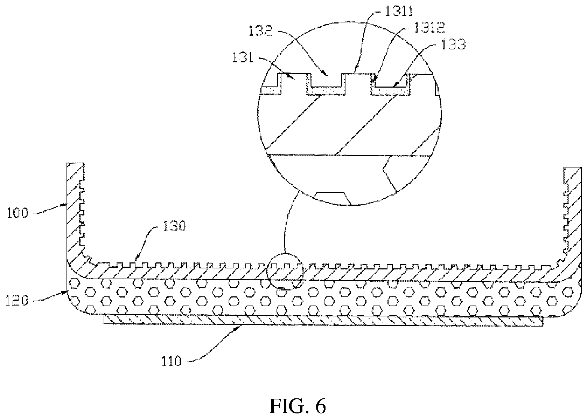

Referring to FIG.s 1 to 7, a first aspect of the present application provides a method of manufacturing a pan, which at least includes the following steps:
S 1. A roll of stainless-steel plate 11 is prepared.
S2. As shown in FIG. 1, the stainless-steel plate 11 is fed into a roller 20 for rolling. A surface of the roller 20 is provided with a convex grain. The stainless-steel plate 11 enters into the roller 20 in a entering direction with an angle formed between the entering direction and a horizontal line, and the stainless-steel plate 11 exits from the roller 20 in a exiting direction with an angle formed between the entering direction and the horizontal line. A pattern 130 with a concave and convex structure is formed on a side of the stainless-steel plate 11 by means of the rolling. As shown in FIG. 3, the pattern 130 includes ribs 131 and grooves 132.
S3. As shown in FIG. 4, the rolled stainless-steel plate 11 is punched to form a shape of a pan body 100, and the pattern 130 is located on an inner surface of the pan body 100 after punching.
S4. As shown in FIG. 5, a bottom of the pan body 100 obtained after punching is sequentially compounded with a uniform heating layer 120 and a heating layer 110.
S5. Part or all of the inner surface of the pan body 100 is sandblasted to form a rough surface on the inner surface of the pan body 100.
S6. The sandblasted surface of the pan body 100 is sprayed to form an anti-stick coating 133 on the inner surface of the pan body 100.
S7. The sandblasted or spray-coated surface of the pan body 100 is polished to remove the coating 133 on the top surface of each of the ribs 131, so that stainless-steel is exposed on the top surface of each of the ribs 131 as shown in FIG. 6, and the pan is obtained.

Further, in the step S2, in the pattern 130 formed after the rolling, the width of the top surface 1311 of the rib is 0.15-0.6mm. However, due to the limitations of demoulding technology, the width of the top surface of each of the ribs of a pattern formed by stamping in the existing technology is greater than 0.5mm, when the width of the top surface 1311 of the rib is less than 0.5mm, it is difficult to demold after the flat surface is stamped as a whole, making it difficult to implement production. According to the present application, rolling is used to form the pattern 130 on the surface of the stainless-steel plate 11 to avoid the problem of demoulding. Therefore, the width of the top surface of each of the ribs 1311 can be made into a smaller size, and the narrower the width of the top surface of each of the ribs 1311 is, the smaller the contact area with food is and the better the anti-stick effect is.

Further, in the step S2, in the pattern formed after the rolling, the depth of each of the grooves 132 is 0.02-0.15 mm, and the depth of each of the grooves 132 can be flexibly set according to the size of the product itself and practical requirements. The depth of each of the grooves 132 also affects the sequence of processes of manufacturing the pan. Specifically, as shown in FIG. 1, when the depth of each of the grooves 132 to be machined is required to be less than 0. 08 mm, the stainless-steel plate 11 directly enters into the roller 20 for rolling; and as shown in FIG. 2, when the depth of each of the grooves to be machined is required to be greater than 0.08 mm, before entering into the roller 20, the stainless-steel plate 11 is first fed to the preheating furnace 30 for heating. The temperature inside the preheating furnace 30 is 200°C-600°C. Through heating in the preheating furnace 30, the stainless-steel plate 11 is softened, and then the softened stainless-steel plate 11 is fed to the roller 20. The softened stainless-steel plate 11 has better plasticity and makes rolling of the pattern easier when passing through the roller 20, thereby reducing the difficulty of machining and improving the product yield rate.

Further, in the step S2, the angle α formed between the entering direction and the horizontal line upon the condition that the stainless-steel plate 11 enters into the roller 20 is 5°-20°, and the angle β formed between the exiting direction and the horizontal line upon the condition that the stainless-steel plate 11 exits from the roller 20 is 5°-20°. As shown in FIG.s 1 and 2, the stainless-steel plate 11 enters and exits from the roller 20 with slight inclination, which makes entry of the stainless-steel plate 11 smooth, as well as results in a smooth separation of the stainless-steel plate 11 from the roller 20 after the rolling.

Further, as shown in FIG.s 1 and 2, in the above step S2, the roller 20 includes a driving roller 21 and a driven roller 22, and the convex pattern is provided on the surface of the driving roller 21.A pressure-increasing roller 23 is also provided in the outer side of the roller 20. The diameter of the pressure-increasing roller 23 is larger than the diameter of the roller 20. Through setting of the pressure-increasing roller 23, the pressure of the roller 20 on the stainless-steel plate is increased. The diameter of the roller 20 is smaller, so that the contact area between the roller 20 and the pressure-increasing roller 23 as well as the stainless-steel plate 11 is reduced, thereby increasing the pressure intensity, and making it easier to roll out the pattern.

Further, in the above step S2, in the pattern 130 formed after the rolling, the top surface 1311 and the side walls 1312 of the rib 131 are perpendicular to each other, and the width of the groove 132 is 0.1-10mm. Such design can further reduce the width of the top surface 1311 and improve the non-stick effect.

Furthermore, in the step S2, the pattern 130 formed after the rolling preferably includes at least one of a mesh shape, a honeycomb shape, or a multi-point pattern.

Further, in the above step S4, the compounded heating layer 110 is made of ferritic stainless-steel and can be heated by induction; and the uniform heating layer 120 is made of aluminum alloy and has high thermal conductivity. The uniform heating layer 120 preferably covers the bottom of the pan body 100 evenly, so that the bottom of the pan body 100 is evenly heated through the heat conduction of the uniform heating layer 120.

Furthermore, in the step S5, sandblasting can be performed with a brown emery abrasive (a-type alumina). For the formed rough surface, the following roughness parameters are required: Ra≥2 microns, preferably 3 microns≤Ra≤5 microns, and Rz≥25 microns, preferably 30 microns≤Rz≤ 50 microns. The rough surface in such roughness can make the subsequently sprayed coating 133 have better adhesion and prevent the coating 133 from falling off during use.

Furthermore, in the step S6, a spray gun can be used to spray the inner surface of the pan body 100 to form the anti-stick coating 133 on the inner surface of the pan body 100.

Furthermore, it is easy to understand that during the machining steps of the above method of manufacturing a pan or after completing the above steps, additional machining steps can be added according to actual needs, such as machining the upper edge of the pan body 100 to form an outer flange 140, and polish the surface of the outer flange 140 to form a smooth surface on the top of the outer flange 140. A handle 200 can also be installed on the pan body 100 through other processes.

Referring to FIG. s 8 and 9, a second aspect of the present application provides a non-stick pan, which is manufactured by using the method of manufacturing a pan of the first aspect of the present application. Specifically, the non-stick pan includes a pan body 100. The pan body 100 is made of a stainless-steel plate 11 that has been rolled first. A side of the stainless-steel plate 11 forms a pattern 130 during the rolling. When the pan body 100 is formed, the pattern 130 is arranged on an inner surface of the pan body 100. A heating layer 110 for induction heating is arranged at a bottom of the pan body 100. A uniform heating layer 120 is arranged between the pan body 100 and the heating layer 110. The inner surface of the pan body 100 is also provided with an anti-stick coating 133. The coating 133 is distributed in grooves 132. The excess coating 133 is removed from the top surface 1311 of ribs by polishing, so that the top surface 1311 of the ribs is not covered by the coating 133, as shown in FIG. 6. Furthermore, an outer flange 140 is arranged in the upper edge of the pan body 100. A top of the outer flange 140 is polished to remove the pattern 130 to form a smooth surface. A handle 200 is also installed on an outer wall of the pan body 100.

According to the method of manufacturing a pan provided by the present application, the pattern 130 with a concave and convex structure is firstly machined on the stainless-steel plate 11 by rolling. Compared with the existing technology, machining the pattern 130 by rolling can avoid the difficult in demoulding, so that the pattern 130 of smaller size can be made, the anti-stick effect of the pan body 100 is improved, and the rolling manner will not pollute the environment. At the same time, the rolling manner can achieve continuous machining of the fine pattern 130, improve production efficiency, and save production materials. The non-stick pan made by using the above method of manufacturing a pan has high production efficiency, and can be used to make smaller-sized patterns, thereby improving the anti-stick effect of the pan body 100, and improving the competitiveness of the product.

The above is a detailed description of the preferred implementation of the present application, but the present application is not limited to the above-mentioned embodiments. Those skilled in the art can also make various equivalent modifications or substitutions without departing from the gist of the present application. These equivalent modifications or substitutions are all included within the scope defined by the claims of this application.

## Claims

1. A method of manufacturing a pan, comprising:
S1, preparing a roll of stainless-steel plate (11);
S2, feeding the stainless-steel plate (11) to a roller (20) with a convex grain for rolling to forma pattern (130) with a concave and convex structure on a side of the stainless-steel plate (11), wherein the pattern (130) comprises ribs (131) and grooves (132), the stainless-steel plate enters into the roller (20) in a entering direction with an angle formed between the entering direction and a horizontal line, and the stainless-steel plate (11) exits from the roller (20) in a exiting direction with an angle formed between the entering direction and a horizontal line;
S3, punching the rolled stainless-steel plate (11) to form a shape of a pan body (100), wherein the pattern (130) is located on an inner surface of the pan body (100) after punching;
S4, compounding a bottom of the pan body (100) obtained after punching with a uniform heating layer (120) and a heating layer (110) in sequence;
S5, sandblasting part or all of the inner surface of the pan body (100) to form a rough surface on the inner surface of the pan body (100);
S6, spraying the sandblasted surface in the pan body (100) to form an anti-stick coating on the inner surface of the pan body (100); and
S7, polishing the sandblasted or sprayed surface in the pan body (100) to remove the coating on a top surface (1311) of each of the ribs (131), so as to expose stainless-steel on the top surface (1311) of each of the ribs (131).

2. The method of manufacturing a pan according to claim 1, in step S2, a width of the top surface (1311) of each of the ribs (131) in the pattern (130) formed after the rolling is 0.15-0.6 mm.

3. The method of manufacturing a pan according to claim 1, in step S2, a depth of each of the grooves (132) in the pattern (130) formed after the rolling is 0.02-0.15 mm.

4. The method of manufacturing a pan according to claim 3, in step S2, upon a condition that the depth of each of the grooves (132) to be machined is required to be greater than 0.08 mm, feeding the stainless-steel plate (11) to a preheating furnace (30) for heating and softening before the stainless-steel plate (11) entering into the roller (20), and then feeding the softened stainless-steel plate (11) to the roller (20).

5. The method of manufacturing a pan according to claim 4, wherein a temperature inside the preheating furnace (30) is 200°C-600°C.

6. The method of manufacturing a pan according to claim 1, wherein the angle α formed between the entering direction and the horizontal line upon the condition that the stainless-steel plate (11) enters into the roller (20) is 5°-20°.

7. The method of manufacturing a pan according to claim 1, wherein the angle β formed between the exiting direction and the horizontal line upon the condition that the stainless-steel plate (11) exits from the roller (20) is 5°-20°.

8. The method of manufacturing a pan according to claim 1, wherein the heating layer (110) is made of ferritic stainless-steel.

9. The method of manufacturing a pan according to claim 1, wherein the uniform heating layer (120) is made of aluminum alloy.

10. A non-stick cookware, wherein the non-stick cookware is manufactured by using the method of manufacturing cookware in any one of claims 1 to 9.
